# EUROPEAN PATENT APPLICATION

(11) **EP 1 179 311 A1**
(43) Date of publication of application: **13.02.2002**
(21) Application number: 00125627.0
(22) Date of filing: 23.11.2000
(51) Int. Cl.: A47J 37/07

(54) **Barbecue grill casting including insulative top cover**

(30) Priority: 11.08.2000 US 636361
(71) Applicant: W.C. Bradley Company, Columbus, GA 31904 (US)
(72) Inventor: Johnston, Robert, Columbus, Georgia 31907 (US)
(74) Representative: Patentanwälte Rehberg + Hüppe

(57) **Abstract**

A barbecue grill (10) that includes a main grill body (14) having an interior portion, a lid (16) that encloses the interior portion of the main grill body, and an insulative top cover (12) that corresponds to a portion of the lid, having a defined thickness. Further, the grill may include a gap between the insulative top cover and the lid when the insulative top cover is fixed upon the lid, such that the gap aids in reducing the amount of heat experienced by the insulative top cover, and may also include at least one vent.

## Description

### CROSS-REFERENCE TO RELATED APPLICATION

This application claims priority to co-pending U.S. Provisional Application entitled, **"BARBECUE GRILL CASTING WITH INSULATIVE TOP COVER,"** having serial no. 60/148,237, filed August 11, 1999, which is entirely incorporated herein by reference.

### TECHNICAL FIELD

The present invention is generally related to barbecue grills and, more particularly, is related to the top cover for the barbecue grills.

### BACKGROUND OF THE INVENTION

Barbecue grills and gas-fired grills in particular, have undergone numerous changes over the years. Early grills were primarily constructed from cast-iron or steel. Porcelain-coated steel is still used by some manufacturers. The majority of present-day grills; however, are cast from aluminum. Whatever construction is used obviously requires that the material used for the grill be capable of withstanding the intense heat generated by the gas burner system, the electric heating element or the charcoal used to cook the food.

High temperature-resistant paints have been and are used on both steel and aluminum grill castings. The paints are typically sprayed on or applied in a powder coat process which is followed by baking the parts in an oven to cure the paint. Porcelain coatings are applied in a similar manner. Over time, with constantly repeated cycles of heating and cooling, all of the coatings currently in use tend to deteriorate. Porcelain coatings in particular tend to chip with heating/cooling cycles, from impacts, or with repeated jarring from opening and closing of the grill hood. Flaking and cracking of the coatings detract greatly from the appearance, if not the performance of the grill.

Further, the high temperature-resistant paints currently used contain large amounts of heavy metals to improve the heat resistance of the paint. In particular, cadmium is used in making the red paint powder that is often desired for barbecue grill covers, particularly porcelain covers. Cadmium is a deadly toxin and environmental pollution by this element can produce dangerously high levels of toxicity. Cadmium becomes a health risk when it is available in a form that could potentially be eaten, absorbed, or inhaled. Contaminated food is one of the main sources of cadmium health problems, primarily because food absorbs and retains cadmium very easily. Therefore, it is desirable to minimize the amount of such heavy metals used in paint on food preparation products, such as barbecue grills.

Therefore, there is a need for improved grill elements which address these and other shortcomings of the prior art.

### BRIEF SUMMARY OF THE SEVERAL VIEWS OF THE DRAWINGS

The invention can be better understood with reference to the following drawings. The components in the drawings are not necessarily to scale, emphasis instead being placed upon clearly illustrating the principles of the present invention. In the drawings, like reference numerals designate corresponding parts throughout the several views.

FIG. 1 illustrates a front perspective view of a barbecue grill incorporating a preferred embodiment of the present invention.

FIG. 2 illustrates a side view of a main grill body of the grill illustrated in FIG. 1, wherein the main grill body incorporates a preferred embodiment of the present invention.

FIG. 3 illustrates an enlarged view of the circle designated at A in FIG. 2.

FIG. 4 illustrates a top plan view of a preferred embodiment of an insulative top cover of the present invention.

FIG. 5 illustrates a front view of a preferred embodiment of an insulative top cover of the present invention.

FIG. 6 illustrates a cross-sectional side view taken along line B-B of FIG. 5.

FIG. 7 illustrates a top-rearward portion perspective view of a preferred embodiment of an insulative top cover of the present invention.

FIG. 8 illustrates a top plan view of another preferred embodiment of an insulative top cover of the present invention.

FIG. 9 illustrates a top-forward portion perspective view of a preferred embodiment of an insulative top cover of the present invention illustrated in FIG. 8.

### DETAILED DESCRIPTION

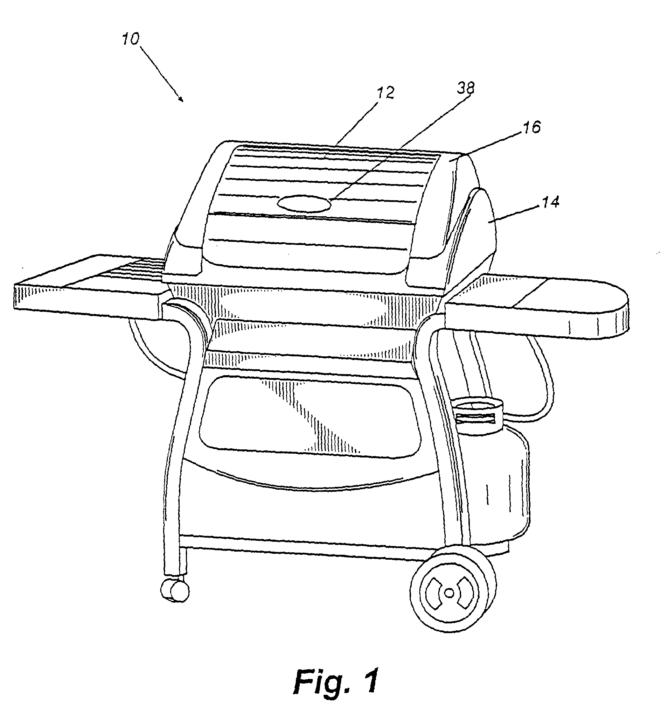

Reference will now be made in detail to the drawings, wherein like reference numerals indicate like parts throughout the several views. As shown in FIG. 1, a barbecue grill 10 for cooking food is illustrated incorporating a preferred embodiment of the present invention, the insulative top cover 12. The grill 10 includes a main grill body 14 being enclosed by and including a lid 16. Food can be cooked, heated, or smoked within the main grill body 14, wherein the lid 16 can be used to enclose an interior portion of the main grill body 14, or to provide access thereto. The lid 16 includes a cast or stamped metal, such as aluminum, steel, or the like. Preferably, the insulative top cover 12 can be formed of metal, such as brushed stainless steel, or cold rolled steel finished with a powder coat paint process, among others. In other embodiments, the insulative top cover 12 can be incorporated into various other grill structures and components where the advantages of the present invention, as described in detail hereinafter, may be appreciated. However, for ease of description and understanding, the present invention will be described herein as an insulative top cover 12 for a lid 16.

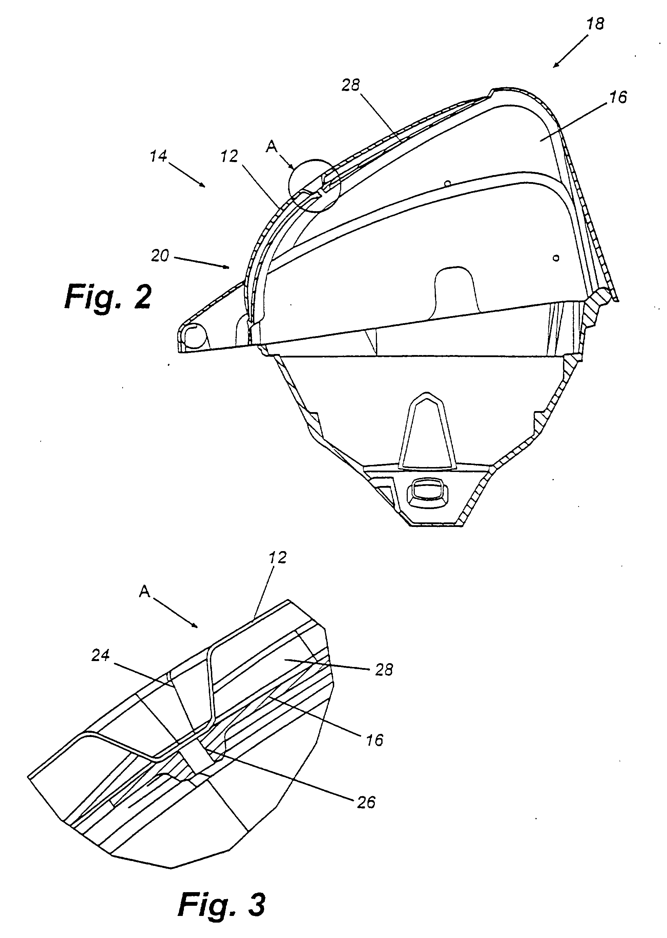

As shown in greater detail in FIG. 2, it is preferred that the insulative top cover 12 is arranged and configured to substantially correspond to a portion of the lid 16. A preferred lid 16 slopes downward from a rearward portion 18 of the main grill body 14 toward a forward portion 20 thereof. The lid 16 preferably includes a portion to which the preferred insulative top cover 12 substantially corresponds and can be affixed thereto. As such, it is preferred that the insulative top cover 12 includes a fixing aperture 24 disposed therein which aligns with a receiving aperture 26 disposed in the lid 16, as can be seen with greater detail in FIG. 3, when the insulative top cover 12 is properly disposed on the lid 16. A fixing member (not shown), such as a pin, screw, bolt, or the like, can be disposed through the aligned fixing aperture 24 and receiving aperture 26 to affix the insulative top cover 12 to the lid 16. It should be noted that the configuration of the lid 16 disclosed herein is for illustrative purposes only, and that the insulative top cover 12 can be arranged and configured to substantially correspond to lids of varied configurations. It should be further understood that the arrangement disclosed herein for fixing the insulative top cover 12 to the lid 16 is but one of many acceptable means with which to fasten the insulative top cover 12 to the lid 16, any of which are within the intended spirit and scope of this disclosure.

It is desirable that the insulative top cover 12 is arranged and configured such that a gap 28 (shown in FIGS. 2 and 3) is formed between the insulative top cover 12 and the lid 16 when the insulative top cover 12 is fixed thereon. The gap 28 aids in reducing the heat experienced by the insulative top cover 12, thereby protecting the insulative top cover 12 from damage due to extremely high temperatures. Further, by reducing the heat experienced by the insulative top cover 12, the insulative top cover can be painted with a pigment that minimizes the use of heavy metals such as cadmium that can degrade or chip off the cover. Reducing the use of toxic heavy metals in the paint used on the barbecue grill covers results in a decreased health risk of contaminating the food or air with toxic heavy metals.

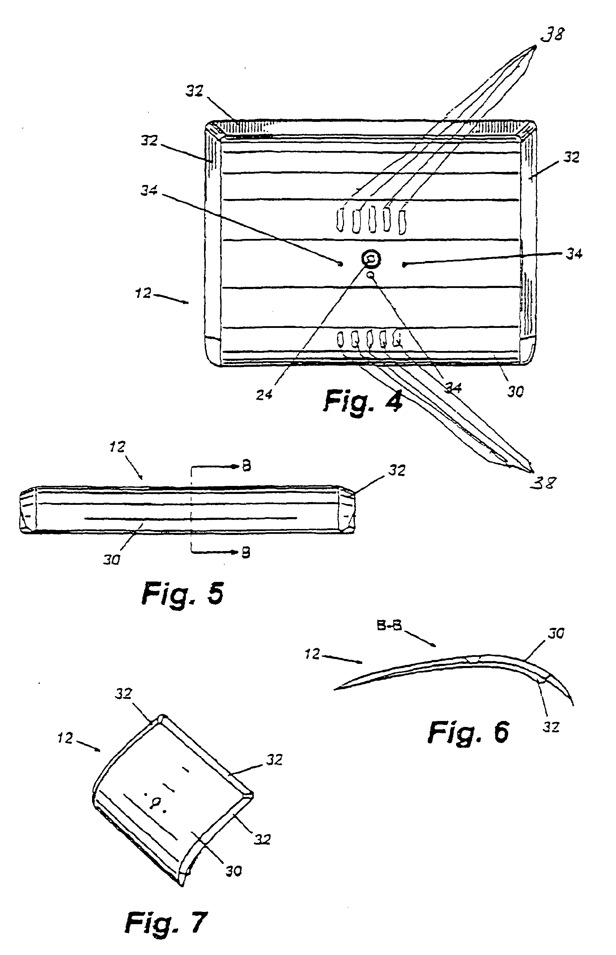

Referring next to FIGS. 4 - 7, a preferred embodiment of the insulative top cover 12 comprises a main top portion 30 and a lip 32 extending from a portion of a perimeter of the main top portion 30. In this configuration, upon disposing the insulative top cover 12 on the lid 16, the lip 32 of the top cover 12 engages the lid 16 while the main top portion 30 remains spaced from the lid 16, creating the advantageous gap 28 (shown in FIGS. 2 and 3) between the insulative top cover 12 and the lid 16. In another preferred embodiment the insulative top cover 12 can comprise a main top portion 30 without a lip 32 extending therefrom. In this configuration the main top portion 30 is arranged and configured such that a portion thereof engages the lid 16 when the insulative top cover 12 is disposed on the lid 16, thereby maintaining the preferred gap 28. The insulative top cover 12 can further include one or a plurality of mounting recesses 34. In a preferred configuration, illustrated in FIG. 4, a pair of mounting recesses 34 are disposed substantially equidistant from the fixing aperture 24. This pair of mounting recesses 34 can be used to affix thereto a decorative plate 38, or the like (FIG. 1), resulting in covering the fixing aperture 24 and fixing member (not shown) implemented to affix the insulative top cover 12 to the lid 16. The insulative top cover 12 can further include a mounting recess 34 for receiving an insert (not shown) such as a heat indicator, or the like. It should be noted that although three mounting recesses 34 are illustrated and disclosed herein, any suitable number of mounting recesses 34 can be disposed in the insulative top cover 12 in any convenient or useful arrangement. It should be further noted that the mounting recesses 34 can be configured as a recess extending partially through a thickness of the insulative top cover 12, or a recess extending fully therethrough.

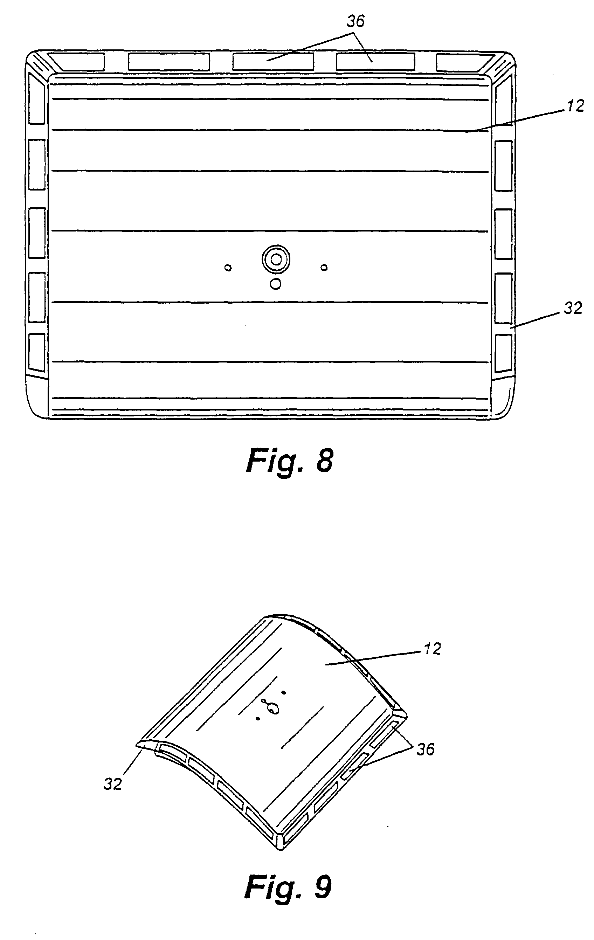

In a second preferred embodiment, illustrated in FIGS. 8 and 9, the insulative top cover 12 can include vents 36 disposed in the lip 32. These vents 36 allow elements that may be introduced to the gap 28 (shown in FIGS. 2 and 3) to pass therethrough and be removed from the gap 28. Such elements can include, but are not limited to, smoke introduced during cooking, heating or cooling of the grill, and/or water resulting from condensation, rain, or the like. It should be noted that although the vents 36 are illustrated as configured in a substantially rectangular shape, the vents 36 can be configured of any suitable shape or sizing, including, but not limited to a circular shape or a perforated portion of the insulative top cover 12. It should be further noted that any number of vents 36 can be disposed in any or all of the edges of the lip 28, or in any portion of the insulative top cover 12 where no lip 28 is included.

As an example of one of the alternate embodiments described hereinabove, shown in Figure 4 are vents 38 which are formed in the main top portion 30 of cover 12. These vents 38 normally, but are not required to, extend through top portion 30 and communicate with the air gap formed between cover 12 and the underlying grill casting or lid 16 to provide additional cooling for cover 12. As above, these vents may be located in various positions in cover 12, formed in any suitable configuration, i.e. round, rectangular, etc., and provided in any number to provide the cooling effect.

It should be emphasized that the above-described embodiments of the present invention, particularly, any "preferred" embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of the present invention.

## Claims

1. A barbecue grill comprising:
a main grill body having an interior portion;
a lid for enclosing the interior portion of the main grill body;
an insulative top cover that corresponds to a portion of the lid, said cover having a defined thickness.

2. The grill of claim 1 wherein the lid comprises a portion to which the insulative top cover corresponds and can be affixed thereto.

3. The grill of claim 1 wherein the lid comprises:
a fixing aperture disposed in the insulative top cover;
a receiving aperture that aligns with the fixing aperture when the insulative top cover is disposed on the lid.

4. The grill of claim 3 wherein the grill further comprises:
a fixing member disposed through the aligned fixing aperture and receiving aperture in such a way as to affix the insulative top cover to the lid.

5. The grill of claim 4 wherein the insulative cover comprises a pair of mounting recesses and a decorative plate received therein for covering the fixing aperture and the fixing member.

6. The grill of claim 1 further comprising a gap between the insulative top cover and the lid when the insulative top cover is fixed thereon for reducing heat experienced by the insulative top cover.

7. The grill of claim 6 further comprising at least one cooling vent formed in said top cover.

8. The grill of claim 7 in which said at least one vent communicates with said gap.

9. The grill of claim 6 further comprising at least one cooling vent formed in said top cover and communicating with said gap.

10. The grill of claim 1 wherein the insulative top cover comprises:
a main top portion having a perimeter;
a lip extending from a portion of the perimeter of the main top portion; and a gap created by disposing the insulative top cover on the lid, the lip engages the lid whereby creating the gap between the insulative top cover and the lid.

11. The grill of claim 10 wherein the insulative top cover further comprises:
at least one vent to allow elements that may be introduced to the gap to pass therethrough and be removed from the gap.

12. The grill of claim 10 wherein at least one vent is disposed in the lip.

13. The grill of claim 10 wherein vents are disposed in at least one edge of the lip.

14. In a barbecue grill having a main grill body and a lid for covering the grill body, the improvement comprising a cover disposed over said lid with an air gap defined therebetween.

15. A barbecue grill as defined in Claim 14 and including a fixing member to secure said cover to said lid.

16. A barbecue grill as defined in Claim 14 in which said cover and said lid include aligned apertures with a fixing member disposed therethrough for securing said cover to said lid.

17. A barbecue grill as defined in Claim 14 and including at least one vent formed in said cover for providing a cooling effect.

18. A barbecue grill as defined in Claim 17 in which said at least one vent communicates with said gap.

19. A barbecue grill as defined in Claim 14 and including at least one vent in communication with said gap.

20. A barbecue grill as defined in Claim 19 and including a plurality of vents.
